(19) Europäisches Patentamt / European Patent Office / Office européen des brevets

(11) **EP 1 829 308 B1**

(12) **EUROPEAN PATENT SPECIFICATION**

(45) Date of publication and mention of the grant of the patent:
**24.08.2016 Bulletin 2016/34**

(21) Application number: **05789459.4**

(22) Date of filing: **26.09.2005**

(51) Int Cl.:
*H04L 25/03* *(2006.01)*      *H04L 25/02* *(2006.01)*

(86) International application number:
**PCT/SE2005/001419**

(87) International publication number:
**WO 2006/036117 (06.04.2006 Gazette 2006/14)**

(54) **ADAPTIVE SIGNAL SET PARTITIONING FOR REDUCED SATE EQUALIZATION AND JOINT DEMODULATION OF MULTIPLE USER SIGNALS**

ADAPTIVE SIGNAL-PARTITIONIERUNG ZUR ENTZERRUNG MIT REDUZIERTEM ZUSTAND UND ZUR GLEICHZEITIGEN DEMODULATION MEHRER NUTZERSIGNALE

PARTITION ADAPTIVE D'ENSEMBLE DES SIGNAUX POUR L'ÉGALISATION EN ÉTAT RÉDUIT ET DÉMODULATION CONJOINTE DE PLUSIEURS SIGNAUX

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.09.2004 US 953261**

(43) Date of publication of application:
**05.09.2007 Bulletin 2007/36**

(73) Proprietor: **Telefonaktiebolaget LM Ericsson (publ)**
**164 83 Stockholm (SE)**

(72) Inventor: **HAFEEZ, Abdulrauf**
**CARY, , NC 27519 (US)**

(74) Representative: **Ericsson**
**Patent Development**
**Torshamnsgatan 21-23**
**164 80 Stockholm (SE)**

(56) References cited:
**DE-A1- 4 427 831**

• **HAFEEZ A ET AL: "Interference cancellation for EDGE via two-user joint demodulation", IEEE 58TH VEHICULAR TECHNOLOGY CONFERENCE - VTC 2003, 6 October 2003 (2003-10-06), page 1025, XP010700987, NJ, USA DOI: 10.1109/VETECF.2003.1285176 ISBN: 978-0-7803-7954-1**

• **HOEHER P A ET AL: "Joint delayed-decision feedback sequence estimation with adaptive state allocation", INTERNATIONAL SYMPOSIUM ON INFORMATION THEORY - ISIT 2004, 27 June 2004 (2004-06-27), - 2 July 2004 (2004-07-02), pages 133-133, XP010749844, NJ, USA DOI: 10.1109/ISIT.2004.1365170 ISBN: 978-0-7803-8280-0**

• **QURESHI S U H ET AL: "REDUCED-STATE SEQUENCE ESTIMATION WITH SET PARTITIONING AND DECISION FEEDBACK", IEEE TRANSACTIONS ON COMMUNICATIONS, vol. 36, no. 1, 1 January 1988 (1988-01-01), pages 13-20, XP000758632, NJ, USA ISSN: 0090-6778, DOI: 10.1109/26.2724**

• **HOEHER P.A. ET AL: 'Joint delayed-decision feedback sequence estimation with adaptive state allocation' INTERNATIONAL SYMPOSIUM ON INFORMATION THEORY, 2004. ISIT 2004. PROCEEDINGS 27 June 2004 - 02 July 2004, page 133, XP010749844 & DATABASE INSPEC [Online] Database accession no. 8178595**

• **HAFEEZ A. ET AL: 'Interference cancellation for EDGE via two-user joint demodulation' 2003 IEEE 58TH VEHICULAR TECHNOLOGY CONFERENCE, 2003. VTC 2003-FALL vol. 2, 06 October 2003 - 09 October 2003, pages 1025 - 1029, XP010700987 -& DATABASE INSPEC [Online] XP002997190 Database accession no. 7930048**

**(Cont. next page)**

- **ZHANG J. ET AL: 'Reduced-state MIMO sequence estimation for EDGE systems' CONFERENCE RECORD OF THE THIRTY-SIXTH ASILOM CONFERENCE ON SIGNALS, SYSTEMS AND COMPUTERS vol. 1, 03 November 2002 - 06 November 2002, pages 541 - 545, XP010638265 -& DATABASE INSPEC [Online] XP002997191 Database accession no. 7798158**

**Description**

**BACKGROUND OF THE INVENTION**

Field of the Invention

The present invention relates in general to the wireless telecommunications field and, in particular, to a method and receiver (mobile station) capable of mitigating interference in a received radio signal by using an enhanced reduced-state sequence estimation (RSSE) technique.

Description of Related Art

Manufacturers of receivers that can be used for example in mobile stations/mobile phones are constantly trying to enhance them so they can more effectively mitigate interference in radio signals that are received from one or more base stations. Prior art Hafeez et al: "Interference cancellation for EDGE via two-user joint demodulation", IEEE 58th Vehicular technology conference - VTC 2003, 6 October 2003, page 1025, XP010700987, NJ, USA and Hoeher P et al: "Joint deleyed-decision feedback sequence estimation with adaptive state allocation", International Symposium on Information Theory - ISIT 2004, 27 June 2004 - 2 July 2004, pages 133-133, XP010749844, NJ, USA describe how to mitigate interference in radio signals that are received from one or more base stations. One way to enhance the receivers so they can effectively mitigate the interference in received radio signals is the subject of the present invention.

BRIEF DESCRIPTION OF THE INVENTION

The present invention includes a method and a receiver (mobile station) for mitigating interference in a radio signal received from a base station and interfered for example by at least one co-channel base station, at least one adjacent channel base station and/or additive white Gaussian noise. The receiver mitigates the interference by using an enhanced reduced-state sequence estimation (RSSE) technique that selects a best set partition which is used to partition a joint signal set that is a function of symbols and channel coefficients associated with the radio signal. The best set partition is selected by exploiting estimated channel responses and/or other channel parameters like rotation and frequency offsets. And, the best set partition describes which signal states of the joint signal set are to be combined together for reduced-state joint demodulation of the radio signal or reduced-state equalization of a multiple-input-multiple-output (MIMO) channel.

**BRIEF DESCRIPTION OF THE DRAWINGS**

A more complete understanding of the present invention may be had by reference to the following detailed description when taken in conjunction with the accompanying drawings wherein:

FIGURE 1 is a block diagram of a wireless communication system that includes a receiver (mobile terminal) configured in accordance with the present invention;

FIGURE 2 is a diagram illustrating an Ungerboeck partition for an 8-PSK signal set;

FIGURE 3 is a block diagram illustrating in greater detail the components of a preferred embodiment of the receiver shown in FIGURE 1 used for reduced-state joint demodulation of multiple users (base stations) in accordance with the present invention;

FIGURE 4 is a flowchart illustrating the steps of the preferred method for determining a best set partition implemented in a set partition selector of the receiver shown in FIGURE 3 in accordance with the present invention;

FIGURE 5 is a graph that illustrates a 2x8 RSSE partition for two 8-PSK modulated users with channel tap estimates $\hat{c}_1(0)=1$ and $\hat{c}_2(0) = 0.2e^{j\pi/2}$;

FIGURE 6 is a graph that illustrates an 8x2 RSSE partition for two 8-PSK modulated users with channel tap estimates $\hat{c}_1(0)=1$ and $\hat{c}_2(0) = 0.2e^{j\pi/2}$;

FIGURE 7 is a graph that illustrates a 4x4 RSSE partition for two 8-PSK modulated users with channel tap estimates $\hat{c}_1(0)=1$ and $\hat{c}_2(0)= 0.2e^{j\pi/2}$;

FIGURE 8 is a graph that illustrates a 2x8 RSSE partition for two 8-PSK modulated users with channel tap estimates $\hat{c}_1(0)=1$, $\hat{c}_2(0)=1.2e^{j\pi/2}$;

FIGURE 9 is a graph that illustrates a 8x2 RSSE partition for two 8-PSK modulated users with channel tap estimates $\hat{c}_1(0)=1$, $\hat{c}_2(0)=1.2e^{j\pi/2}$;

FIGURE 10 is a graph that illustrates a 4x4 RSSE partition for two 8-PSK modulated users with channel tap estimates $\hat{c}_1(0)=1$, $\hat{c}_2(0)=1.2e^{j\pi/2}$; and

FIGURE 11 is a graph that illustrates (a) 2×1 partition, (b) 1x2 partition, and (c) a joint 2-state partition for BPSK modulated users for $\hat{c}_1(0)=1$, $\hat{c}_2(0)=0.2e^{j\pi/2}$.

## DETAILED DESCRIPTION OF THE DRAWINGS

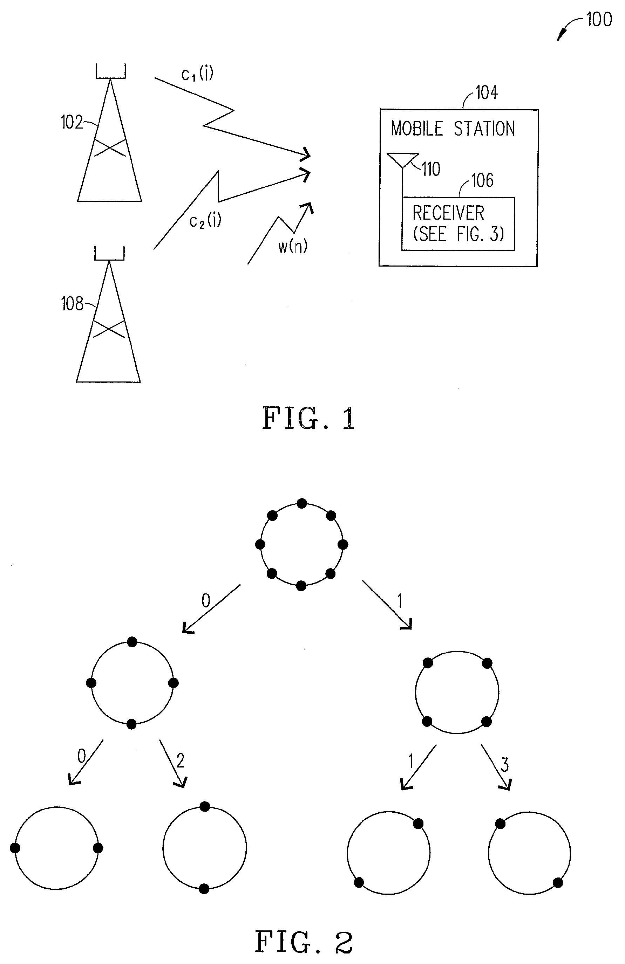

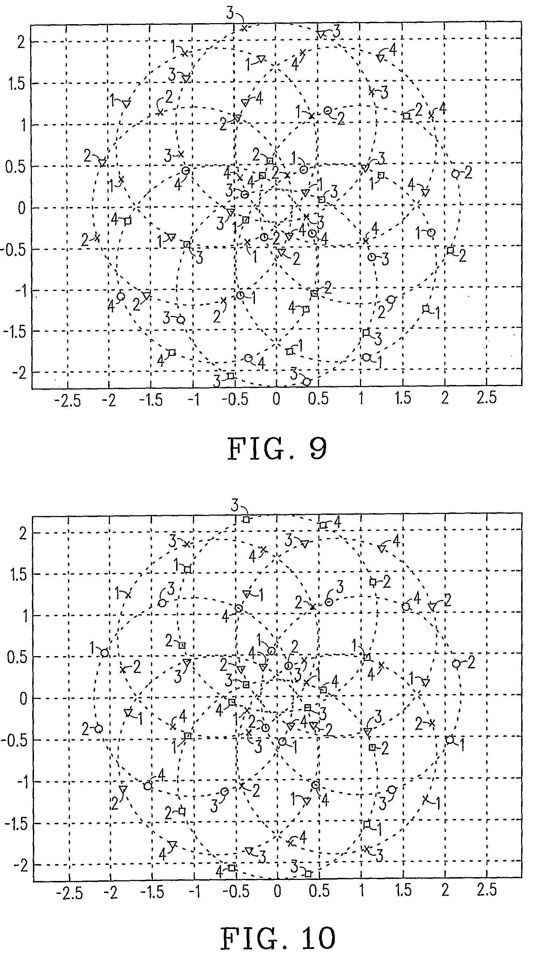

Referring to FIGURES 1-11, there is shown a receiver 106 that mitigates interference in a received radio signal by using an enhanced reduced-state sequence estimation (RSSE) technique in accordance with the present invention. It is well known that interference mitigation at a receiver (mobile station) is a major issue in wireless communication systems. In the past, receivers often implemented a maximum likelihood sequence estimation (MLSE) technique to enable equalization of inter-symbol interference and mitigation of multiuser interference through joint demodulation of multiple users (base stations). For a detailed discussion about the MLSE technique reference is made to an article written by G. D. Forney that is entitled "Maximum-likelihood sequence estimation of digital sequences in presence if ISI," IEEE Trans. On Inf. Theory., vol. IT-18, pp. 363-378, May 1972.

Reduced-state sequence estimation (RSSE) is a highly effective reduced-complexity alternative to MLSE. It is well known that in RSSE, the number of states is reduced by partitioning each element in a state vector into a given number of subsets and representing the subset state vector as a reduced-state trellis. The partitioning of the signal set is done on the basis of Ungerboeck's set partitioning principles that are designed to optimize performance. For a detailed discussion about the RSSE technique and Ungerboeck's set partitioning principles reference is made to the following articles: (1) M. V. Eyuboglu and S.U.H. Quereshi, "Reduced-state sequence estimation with set partitioning and decision feedback," IEEE Trans. Commun., vol. 36, pp. 13-20, Jan, 1998; (2) A. Duel-Hallen and C. Heegard, "Delayed decision-feedback sequence estimation," IEEE Trans. Commun., vol. COM-37, pp. 428-436, May 1989; and (3) G. Ungerboeck "Channel coding with multilevel/phase signals," vol. IT-28, pp. 55-67, Jan. 1982.

RSSE has been considered for joint demodulation of multiple users. In addition, RSSE has been considered for equalization of multiple-input-multiple-output (MIMO) channels. In these cases, the over-all or joint signal set, which is to be partitioned, is a function of not only the symbols but also the channel coefficients. Thus, optimum set partitioning needs to take into consideration the channel coefficients which may vary over time or from burst to burst due to fading and frequency hopping. The present invention provides a method for enabling an enhanced RSSE with set partitioning which is done in consideration of the channel coefficients and other modulation parameters like rotation and frequency offsets.

To help describe the present invention, consider a wireless communication system 100 as shown in FIGURE 1. A signal $c_1(i)$ transmitted from a base station 102 (desired user 102) to a single-antenna receiver 106 (shown) or a multi-antenna receiver (not shown) in a mobile station 104. The signal is received by the receiver 106 in the presence of interference arising from signals $c_2(i)$ transmitted from co-channel base stations 108 (only one nondesired user 108 is shown) and additive white Gaussian noise w(n). The desired base station 102 and interfering co-channel base station 108 (only one shown) may employ different modulation schemes (GMSK or 8-PSK) to transmit information. The radio signal, received by a single antenna 110 at the mobile station 104, is converted into baseband and filtered. The filtered signal is sampled at the symbol rate and derotated to undo the modulation rotation of the desired base station 102. The sampled received signal r(n) from two users 102 and 108 is given by:

$$r(n) = \sum_{i=0}^{L} c_1(i)s_1(n-i) + \sum_{i=0}^{L} c_2(i)s_2(n-i) + w(n) \qquad (1)$$

where $s_k(n)$ and $c_k(i)$ are the transmitted symbols (which take values in the set $A_k$ of cardinality $M_k$) and channel coefficients (spanning $L+1$ symbols) for user k, respectively (user 1 being the desired user), and w(n) is a sample of a white Gaussian noise process. Let

$$p_n = \begin{bmatrix} s_1(n-1), & s_1(n-2), & \mathrm{K} & s_1(n-L) \\ s_2(n-1), & s_2(n-2), & \mathrm{K}\ s\ (n-L) \end{bmatrix} \qquad (2)$$

represent the state of the joint trellis for MLSE. The number of states in the joint trellis is $(M_1M_2)^L$. Using RSSE, the number of states in the joint trellis can be reduced to $\prod_{\lambda=1}^{L} J_1(\lambda)J_2(\lambda)$, where $J_k(\lambda) \le M_k, \forall \lambda, k$. This is done by partitioning the set of signal points corresponding to the symbol $s_k$(n-λ) into $J_k(\lambda)$ subsets (of size $M/J_k(\lambda)$) as defined

by the partition $\Omega_k(\lambda)$ for $\lambda=1,2,K$ $L$. To define a proper trellis, set partitioning is done such that each partition $\Omega_k(\lambda)$ is a further partition of the subsets of the partition $\Omega_k(\lambda+1)$, i.e. $\Omega_k(\lambda)\geq\Omega_k(\lambda+1)$, $\forall\lambda$. The subset state (or reduced state) $t_n$ is defined as the sequence of subsets of the L most recent symbols for both users 102 and 108 in the respective partitions, i.e.

$$t_n = \begin{bmatrix} a_1(n-1), & a_1(n-2), & K & a_1(n-L) \\ a_2(n-1), & a_2(n-2), & K & a_2(n-L) \end{bmatrix} \tag{3}$$

where $a_k(n-\lambda)$ is the index of the subset of the partition $\Omega_k(\lambda)$ to which the symbol $S_k(n-\lambda)$ belongs. The index $a_k(n-\lambda)$ can take values in the set of integers between 1 and $J_k(\lambda)$. The current state $t_n$ is uniquely identified by the previous state $t_{n-1}$ and the subsets $a_1(n)$ and $a_2(n)$ of the current symbols. There are $M_1 \times M_2$ branches emanating from each state corresponding to the $M_1 \times M_2$ possible values of the symbol vector $[s_1(n),s_2(n)]^T$. However, there are only $J_1(1) \times J_2(1)$ next states for each current state corresponding to the values of the subset index vector $[a_1(n),a_2(n)]^T$. Thus, two branches or paths originating from the same state at time n end up on the same state at time $n+1$ if their current symbol hypotheses belong to the same subset index vector. These paths are called parallel paths.

In the joint RSSE scheme described above, the partition is defined independently for each user 102 and 108. In this case, set partitioning may be done as in single-user RSSE (see article by M.V. Eyuboglu), where the subsets are chosen such that the minimum intra-subset Euclidean distance is maximized. Ungerboeck showed that this can be achieved by successive two-way partitions of the signal space as shown in FIGURE 2 for 8-PSK signal set. For the joint RSSE scheme described above, Ungerboeck's 'set partitioning principles can be applied independently for the two users 102 and 108. In the following, we consider joint RSSE partitions denoted as $J_1(1) \times J_2(1)$ (for L≡1) where the signal set for the first user is partitioned into $J_1(1)$ subsets and the signal set for the second user is partitioned into $J_2(1)$ subsets. In general, multiple set partitions can be found with the same number of states. For example, for $L=1$ and $M_1=M_2=8$, the partitions: $J_1(1) \times J_2(1) \equiv 8 \times 2, 4 \times 4$, and 2x8 have 16 states each. Finding the best RSSE configuration or partition is the subject matter of the present invention which is described in detail next.

The present invention includes a method for finding the best set partition for reduced state equalization or joint demodulation by exploiting the estimated channel responses and/or other channel parameters. The set partition describes which signal states are to be combined together for reduced-state joint demodulation of multiple users 102 and 108 or reduced-state equalization of a MIMO channel. In the present invention, a different set partition may be used for demodulation of each burst (or slot) of data.

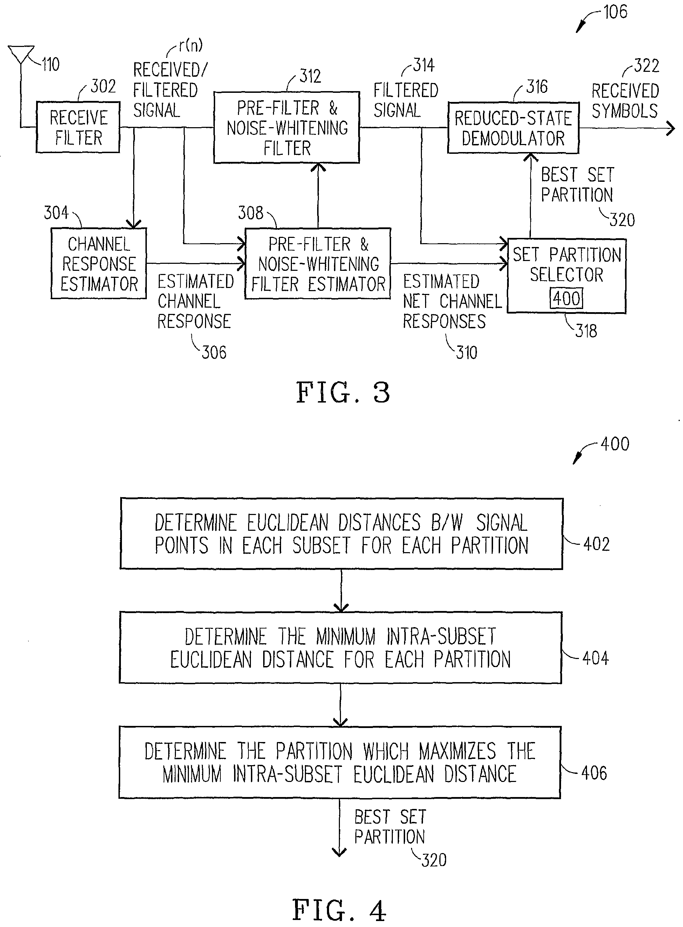

Referring to FIGURE 3, there is shown a block diagram of a preferred embodiment of the receiver 106 used for joint demodulation of two users 102 and 108 in accordance with the present invention. As shown, the radio signal is received by the antenna 110 and filtered and possibly over-sampled by a front-end receive filter 302. A channel response estimator 304 estimates the channel responses 306 of the two users 102 and 108 by using their training symbols. A pre-filter and noise-whitening filter estimator 308 estimates the net channel responses 310 based on the estimated channel responses 306 and the received signal r(n). The received signal r(n) is passed through the pre-filter and noise-whitening filter 312 which uses the estimated net channel responses 310 before being fed as a filtered signal 314 to a joint demodulator/reduced-state demodulator 316. A set partition selector 318 which receives the filtered signal 314 then selects the best partition 320 from a set of given partitions by exploiting the estimated net channel responses 310 for the two users 102 and 108 obtained from the channel and pre-filter estimators 304 and 308. The reduced-state demodulator 316 uses the reduced-state joint trellis determined by the selected set partition 320 to jointly demodulate the data symbols in the filtered signal 314 received from two users 102 and 108 and then output received symbols 322.

The set partition selector 318 finds the partition which maximizes the minimum Euclidean distance between parallel paths in the joint trellis. Since parallel paths in the joint trellis differ in the current symbols of the users 102 and 108, set partitioning is done for the current symbol time. The signal set for the current symbol time is given by all possible values of $\{\hat{c}_1(0)s_1+\hat{c}_2(0)s_2\}$, where $s_k \in A_k$ are the symbol hypotheses and $\hat{c}_k(0)$ is the first tap of the estimated net channel response 306 for users k. The Euclidean distance between signal points $s_1^a, s_2^a$ and $s_1^b, s_2^b$ is given by

$$\left| \hat{c}_1(0)s_1^a + \hat{c}_2(0)s_2^a - \hat{c}_1(0)s_1^b - \hat{c}_2(0)s_2^b \right|^2.$$ One embodiment of the method 400 used by the set partition selector 318 to select the best set partition 320 is shown in FIGURE 4. As shown, the set partition selector 318 finds the partition 320 that maximizes the minimum intra-subset Euclidean distance by (1) determining Euclidean distances between signal points in each subset for each partition (step 402); (2) determining a minimum intra-subset Euclidean distance for each partition (step 404); and (3) determining the best set partition 320 which is the one that maximizes the minimum intra-subset Euclidean distance (step 406).

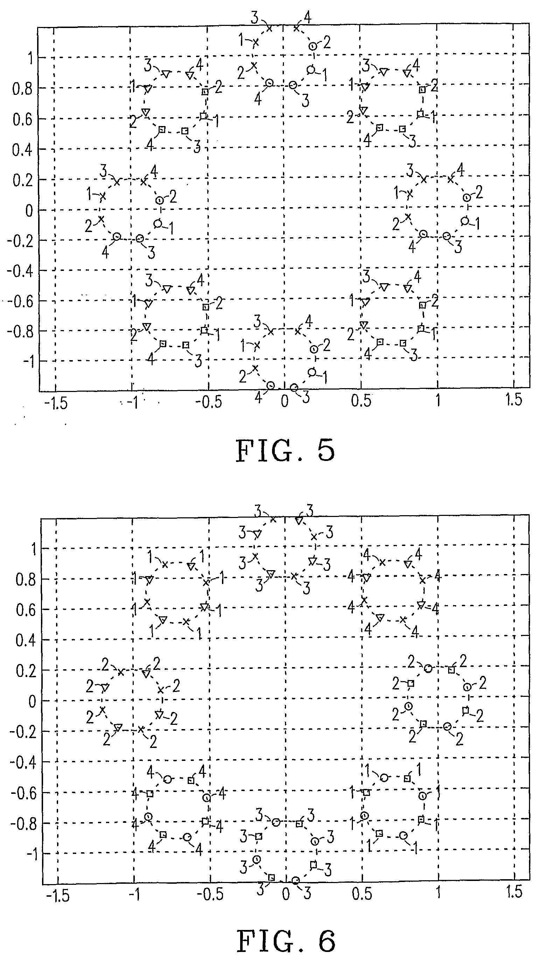

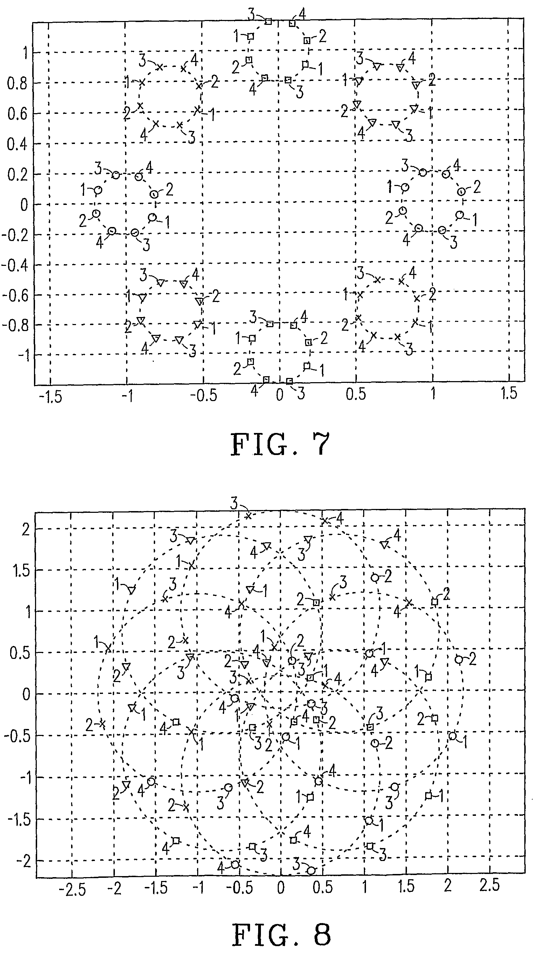

To illustrate the operation of the set partition selector 318, consider the graphs shown in FIGURES 5-10 which illustrate several examples of joint demodulation of two users 102 and 108 with 8-PSK modulation and channel memory $L\equiv1$ and a joint RSSE with 16 states. In these graphs, it should be noted that a joint RSSE partition where the signal set for the first user is partitioned into $J_1(1)$ subsets and the signal set for the second user is partitioned into $J_2(1)$ subsets is denoted as $J_1(1)\times J_2(1)$. Also, in these graphs, the signal points that belong to the same subset are marked with the same legend (and the same reference number 1, 2, 3 or 4). In particular, FIGURES 5-7 are graphs that show various 16-state partitions for $\hat{c}_1(0)=1$ and $\hat{c}_2(0)=0.2e^{J\pi/10}$. With respect to these graphs, it can be observed that the 2x8 partition maximizes the minimum intra-subset Euclidean distance. FIGURES 8-10 show the partitions for $\hat{c}_1(0)=1$ and $\hat{c}_2(0)=1.2e^{j\pi/10}$. With respect to these graphs, the 8x2 partition maximizes the Euclidean distance. It turns out that for a 16-state joint RSSE, the 2x8 partition maximizes the minimum intra-subset Euclidean distance if $|\hat{c}_1(0)|>|\hat{c}_2(0)|$ and the $8\times2$ partition maximizes the distance if $|\hat{c}_1(0)|<|\hat{c}_2(0)|$. For an 8-state joint RSSE, the partitions $8\times1$, $2\times4$, $4\times2$, and $1\times8$ need all be considered to maximize the distance under various channel conditions. As in the 16-state case, it may be possible to derive simple tests based on the channel tap strengths to determine the best set partition 320. In this case, it will not be necessary to find the Euclidean distances between the signal points of a subset for all subsets of all partitions to find the optimal set partition 320 as in FIGURE 4.

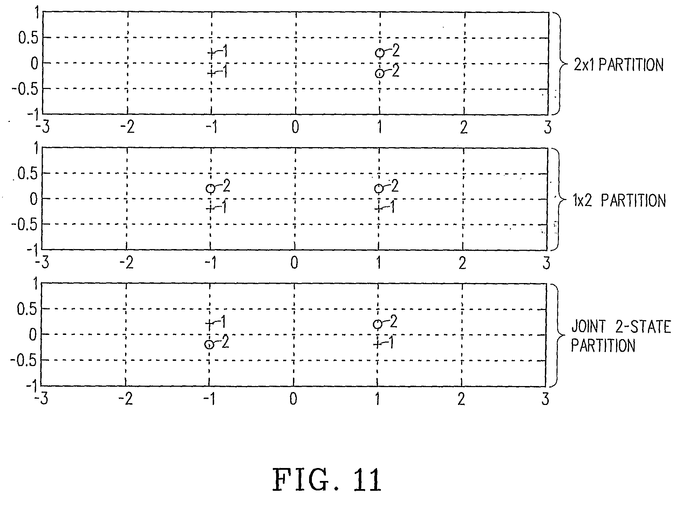

In the RSSE scheme described above, signal set partitioning is done independently for each user 102 and 108, although the best set partition 320 is chosen by considering the joint signal set. Signal set partitioning can also be done jointly for the users 102 and 108 by considering the joint signal set. However, this is more difficult for higher-order modulation as the joint signal set depends on the channel coefficients. Following is an example to illustrate the joint set partitioning. Consider two users with binary modulation and channel memory equal to one. Next consider joint demodulation using RSSE with two states. Three partitions of the joint signal set are shown in FIGURE 11 for $\hat{c}_1(0)=1$ and $\hat{c}_2(0)=0.2e^{j\pi/2}$. The first two partitions are independent partitions 2x1 and 1x2, while the third partition is a joint partition. It can be seen that the joint partition maximizes the minimum intra-subset Euclidian distance and is thus the best partition for the given channel taps.

A detailed description of the reduced-state joint demodulation of two users 102 and 108 has been provided above with respect to FIGURES 1-11. It should be appreciated that the use of the present invention for reduced-state MIMO channel equalization is simply a generalization of the joint demodulation embodiment.

Moreover, in the preferred embodiment of the present invention described above, it should be appreciated that the signal was interfered by at least one co-channel base station and additive white Gaussian noise. However, it should be noted that the interfering co-channel base station may not be an interferer because MIMO channel equalization using RSSE does not employ joint demodulation of two users. In addition, it should be noted that an adjacent channel base station nay be an interferer because joint demodulation can be performed for an adjacent channel interferer.

Furthermore, it should be appreciated that many components and details associated with the receiver 106 described above are well known in the industry. Therefore, for clarity, the description with respect to the receiver 106 omitted those well known components and details that are not necessary to understand the present invention which is defined and limited only by the scope of appended claims 1-19.

**Claims**

1. A receiver (106) comprising:

   a receive antenna (110) and receive filter (302) for receiving and filtering a radio signal;
   a channel response estimator (304) for estimating channel responses (306) using training symbols in the received radio signal;
   said receiver being **characterized in that** it further comprises:

   a pre-filter and noise-whitening filter estimator (308) for estimating net channel responses (310) using the estimated channel responses (306) and the received radio signal ;
   a pre-filter and noise-whitening filter (312) for filtering the received radio signal using the estimated net channel responses (310);
   a set partition selector (318) for selecting a best set partition (320) from a group of given partitions by using the estimated net channel responses (310) and the filtered radio signal (314), where said selected best set partition (320) describes which signal states of a joint signal set associated with the filtered radio signal (314) are to be combined together to determine a reduced-state joint trellis; and
   a reduced-state demodulator (316) for jointly demodulating multiple data symbols (322) in the filtered radio signal (314) using the reduced-state joint trellis
   determined by the selected best set partition (320), wherein the multiple data symbols (322) in said filtered radio signal have been received from at least two transmitters (102) and (108).

**2.** The receiver (106) of Claim 1, wherein said set partition selector (318) selects the best set partition (320) by:

determining (402) Euclidean distances between signal points in each subset for each partition;
determining (404) a minimum intra-subset Euclidean distance for each partition; and
determining (406) the best set partition (320) which is the one that maximizes the minimum intra-subset Euclidean distance.

**3.** The receiver (106) of Claim 1, wherein said selected best set partition (320) describes which signal states of a joint signal set associated with the filtered radio signal (314) are to be combined together for reduced-state equalization of a multiple-input-multiple-output , MIMO, channel.

**4.** The receiver (106) of Claim 1, wherein said selected best set partition (320) describes which signal states of a joint signal set associated with the filtered radio signal (314) are to be combined together for reduced-state joint demodulation of the filtered radio signal (314).

**5.** The receiver (106) of Claim 1, wherein said set partition selector (318) selects a different best set partition (320) for each burst of data in the filtered radio signal (314).

**6.** The receiver (106) of Claim 1, wherein said receive filter (302) over-samples the received radio signal.

**7.** A method for mitigating interference at a receiver in a wireless communication system, said method comprising the steps of:

receiving and filtering a radio signal (r(n));
estimating channel responses (306) using training symbols in the received radio signal;
said method being **characterized by**:

estimating net channel responses (310) using the estimated channel responses (306) and the received radio signal;
filtering the received radio signal using the estimated net channel responses (310);
selecting a best set partition (320) from a group of given partitions by using the estimated net channel responses (310) and the filtered radio signal (314) where said selected best set partition (320) describes which signal states of a joint signal set associated with the filtered radio signal (314) are to be combined together to determine a reduced-state joint trellis; and
jointly demodulating multiple data symbols (322) in the filtered radio signal (314) using the reduced-state joint trellis determined by the selected best set partition (320), wherein the multiple data symbols (322) in said filtered radio signal have been received from at least two transmitters (102) and (108).

**8.** The method of Claim 7, wherein said set partition selector (318) selects the best set partition (320) by:

determining (402) Euclidean distances between signal points in each subset for each partition;
determining (404) a minimum intra-subset Euclidean distance for each partition; and
determining (406) the best set partition (320) which is the one that maximizes the minimum intra-subset Euclidean distance.

**9.** The method of Claim 7, wherein said selected best set partition (320) describes which signal states of a joint signal set associated with the filtered radio signal (314) are to be combined together for reduced-state equalization of a multiple-input-multiple-output , MIMO, channel.

**10.** The method of Claim 7, wherein said selected best set partition (320) describes which signal states of a joint signal set associated with the filtered radio signal (314) are to be combined together for reduced-state joint demodulation of the filtered radio signal (314).

**11.** The method of Claim 7, wherein a different best set partition (320) is selected for each burst of data in the filtered radio signal (314).

**12.** A wireless communication system (100) comprising:

a transmitting unit (102);
a receiving unit (104) for mitigating interference from at least one second transmitting unit (108) in a radio signal received from said transmitting unit (102); and

wherein said receiving unit (104) further includes:

a receive antenna (110) and receive filter (302) for receiving the radio signal;
a channel response estimator (304) for estimating channel responses (306) of the transmitting unit (102) and the at least one second transmitting unit (108) using training symbols in the received radio signal;
a pre-filter and noise-whitening filter estimator (308) for estimating net channel responses (310) using the estimated channel responses (306) and the received radio signal ;
said wireless communication system being **characterized in that** said receiving unit further comprises:

a pre-filter and noise-whitening filter (312) for filtering the received radio signal using the estimated net channel responses (310);
a set partition selector (318) for selecting the best set partition (320) from a group of given partitions by using the estimated net channel responses (310) and the filtered radio signal (314), where said selected best set partition (320) describes which signal states of a joint signal set associated with the filtered radio signal (314) are to be combined together to determine a reduced-state joint trellis; and
a reduced-state demodulator (316) for jointly demodulating multiple data symbols (322) in the filtered radio signal (314) using the reduced-state joint trellis determined by the selected best set partition (320), wherein the multiple data symbols (322) in said filtered radio signal have been received from the at least two transmitting units (102) and (108).

13. The wireless communication system (100) of Claim 12, wherein said radio signal is interfered by signals of at least one co-channel base station (108) and additive white Gaussian noise.

14. The wireless communication system of Claim 12, wherein said radio signal is interfered by signals of at least one adjacent channel base station (108) and additive white Gaussian noise.

15. The wireless communications system (100) of Claim 12, wherein said set partition selector (318) selects the best set partition (320) by:

determining (402) Euclidean distances between signal points in each subset for each partition;
determining (404) a minimum intra-subset Euclidean distance for each partition; and
determining (406) the best set partition (320) which is the one that maximizes the minimum intra-subset Euclidean distance.

16. The wireless communication system (100) of Claim 12, wherein said receive filter (302) over-samples the received radio signal.

17. The wireless communications system (100) of Claim 12, wherein said receiving unit (104) is a mobile station.

18. The wireless communications system (100) of Claim 12, wherein said transmitting unit (102) is a base station.

19. The wireless communications system (100) of Claim 12, wherein said receiving unit (104) is a single antenna receiving unit (104) or a multi-antenna receiving unit (104).

**Patentansprüche**

1. Empfänger (106), umfassend:

eine Empfangsantenne (110) und einen Empfangsfilter (302) zum Empfangen und Filtern eines Funksignals;
einen Kanalantwortschätzer (304) zum Schätzen von Kanalantworten (306) unter Verwendung von Trainingssymbolen im empfangenen Funksignal;
wobei der Empfänger **dadurch gekennzeichnet ist, dass** er weiter Folgendes umfasst:

einen Vorfilter- und Rausch-Weißen-Filterschätzer (308) zum Schätzen von Nettokanalantworten (310) unter Verwendung der geschätzten Kanalantworten (306) und des empfangenen Funksignals;

einen Vorfilter und Rausch-Weißen-Filter (312) zum Filtern des empfangenen Funksignals unter Verwendung der geschätzten Nettokanalantworten (310);

einen Partitionsselektor (318) zum Auswählen einer besten Partition (320) aus einer Gruppe von gegebenen Partitionen durch Verwendung der geschätzten Nettokanalantworten (310) und des gefilterten Funksignals (314), wobei die ausgewählte beste Partition (320) beschreibt, welche Signalzustände eines gemeinsamen Signalsatzes, assoziiert mit dem gefilterten Funksignal (314), miteinander zu kombinieren sind, um ein gemeinsames Gitter mit reduziertem Zustand zu bestimmen; und

einen Demodulator mit reduziertem Zustand (316) zum gleichzeitigen Demodulieren mehrerer Datensymbole (322) im gefilterten Funksignal (314) unter Verwendung des durch die ausgewählte beste Partition (320) bestimmten gemeinsamen Gitters mit reduziertem Zustand, wobei die mehreren Datensymbole (322) in dem gefilterten Funksignal von mindestens zwei Sendern (102) und (108) empfangen worden sind.

2. Empfänger (106) nach Anspruch 1, wobei der Partitionsselektor (318) die beste Partition (320) auswählt durch:

Bestimmen (402) von euklidischen Abständen zwischen Signalpunkten in jeder Teilmenge für jede Partition;
Bestimmen (404) eines euklidischen Mindestabstands innerhalb einer Teilmenge für jede Partition; und
Bestimmen (406) der besten Partition (320), welche diejenige ist, die den euklidischen Mindestabstand innerhalb einer Teilmenge maximiert.

3. Empfänger (106) nach Anspruch 1, wobei die ausgewählte beste Partition (320) beschreibt, welche Signalzustände eines gemeinsamen Signalsatzes, assoziiert mit dem gefilterten Funksignal (314), für die Entzerrung eines Mehrfach-Eingabe-Mehrfach-Ausgabe-(MIMO)-Kanals mit reduziertem Zustand miteinander zu kombinieren sind.

4. Empfänger (106) nach Anspruch 1, wobei die ausgewählte beste Partition (320) beschreibt, welche Signalzustände eines gemeinsamen Signalsatzes, assoziiert mit dem gefilterten Funksignal (314), für die gleichzeitige Demodulation des gefilterten Funksignals (314) mit reduziertem Zustand miteinander zu kombinieren sind.

5. Empfänger (106) nach Anspruch 1, wobei der Partitionsselektor (318) eine unterschiedliche beste Partition (320) für jeden Datenblock im gefilterten Funksignal (314) auswählt.

6. Empfänger (106) nach Anspruch 1, wobei der Empfangsfilter (302) das empfangene Funksignal übersampelt.

7. Verfahren zum Abschwächen von Beeinträchtigung an einem Empfänger in einem drahtlosen Kommunikationssystem, wobei das Verfahren die folgenden Schritte umfasst:

Empfangen und Filtern eines Funksignals (r(n));
Schätzen von Kanalantworten (306) unter Verwendung von Trainingssymbolen im empfangenen Funksignal; wobei das Verfahren **gekennzeichnet ist durch**:

Schätzen von Nettokanalantworten (310) unter Verwendung der geschätzten Kanalantworten (306) und des empfangenen Funksignals;
Filtern des empfangenen Funksignals unter Verwendung der geschätzten Nettokanalantworten (310);
Auswählen einer besten Partition (320) aus einer Gruppe von gegebenen Partitionen **durch** Verwendung der geschätzten Nettokanalantworten (310) und des gefilterten Funksignals (314), wobei die ausgewählte beste Partition (320) beschreibt, welche Signalzustände eines gemeinsamen Signalsatzes, assoziiert mit dem gefilterten Funksignal (314), miteinander zu kombinieren sind, um ein gemeinsames Gitter mit reduziertem Zustand zu bestimmen; und

gleichzeitiges Demodulieren mehrerer Datensymbole (322) im gefilterten Funksignal (314) unter Verwendung des **durch** die ausgewählte beste Partition (320) bestimmten gemeinsamen Gitters mit reduziertem Zustand, wobei die mehreren Datensymbole (322) in dem gefilterten Funksignal von mindestens zwei Sendern (102) und (108) empfangen worden sind.

8. Verfahren nach Anspruch 7, wobei der Partitionsselektor (318) die beste Partition (320) auswählt durch:

Bestimmen (402) von euklidischen Abständen zwischen Signalpunkten in jeder Teilmenge für jede Partition;
Bestimmen (404) eines euklidischen Mindestabstands innerhalb einer Teilmenge für jede Partition; und

Bestimmen (406) der besten Partition (320), welche diejenige ist, die den euklidischen Mindestabstand innerhalb einer Teilmenge maximiert.

**9.** Verfahren nach Anspruch 7, wobei die ausgewählte beste Partition (320) beschreibt, welche Signalzustände eines gemeinsamen Signalsatzes, assoziiert mit dem gefilterten Funksignal (314), für die Entzerrung eines Mehrfach-Eingabe-Mehrfach-Ausgabe-(MIMO)-Kanals mit reduziertem Zustand miteinander zu kombinieren sind.

**10.** Verfahren nach Anspruch 7, wobei die ausgewählte beste Partition (320) beschreibt, welche Signalzustände eines gemeinsamen Signalsatzes, assoziiert mit dem gefilterten Funksignal (314), für die gleichzeitige Demodulation des gefilterten Funksignals (314) mit reduziertem Zustand miteinander zu kombinieren sind.

**11.** Verfahren nach Anspruch 7, wobei für jeden Datenblock im gefilterten Funksignal (314) eine unterschiedliche beste Partition (320) ausgewählt wird.

**12.** Drahtloses Kommunikationssystem (100), umfassend:

eine Übertragungseinheit (102);
eine Empfangseinheit (104) zum Abschwächen von Beeinträchtigung von mindestens einer zweiten Übertragungseinheit (108) in einem von der Übertragungseinheit (102) empfangenen Funksignal; und
wobei die Empfangseinheit (104) weiter Folgendes beinhaltet:

eine Empfangsantenne (110) und einen Empfangsfilter (302) zum Empfangen des Funksignals;
einen Kanalantwortschätzer (304) zum Schätzen von Kanalantworten (306) der Übertragungseinheit (102) und der mindestens einen zweiten Übertragungseinheit (108) unter Verwendung von Trainingssymbolen im empfangenen Funksignal;
einen Vorfilter- und Rausch-Weißen-Filterschätzer (308) zum Schätzen von Nettokanalantworten (310) unter Verwendung der geschätzten Kanalantworten (306) und des empfangenen Funksignals;
wobei das drahtlose Kommunikationssystem **dadurch gekennzeichnet ist, dass** die Empfangseinheit weiter Folgendes umfasst:

einen Vorfilter und Rausch-Weißen-Filter (312) zum Filtern des empfangenen Funksignals unter Verwendung der geschätzten Nettokanalantworten (310);
einen Partitionsselektor (318) zum Auswählen der besten Partition (320) aus einer Gruppe von gegebenen Partitionen durch Verwendung der geschätzten Nettokanalantworten (310) und des gefilterten Funksignals (314), wobei die ausgewählte beste Partition (320) beschreibt, welche Signalzustände eines gemeinsamen Signalsatzes, assoziiert mit dem gefilterten Funksignal (314), miteinander zu kombinieren sind, um ein gemeinsames Gitter mit reduziertem Zustand zu bestimmen; und
einen Demodulator mit reduziertem Zustand (316) zum gleichzeitigen Demodulieren mehrerer Datensymbole (322) im gefilterten Funksignal (314) unter Verwendung des durch die ausgewählte beste Partition (320) bestimmten gemeinsamen Gitters mit reduziertem Zustand, wobei die mehreren Datensymbole (322) in dem gefilterten Funksignal von den mindestens zwei Übertragungseinheiten (102) und (108) empfangen worden sind.

**13.** Drahtloses Kommunikationssystem (100) nach Anspruch 12, wobei das Funksignal durch Signale von mindestens einer Zweitkanalbasisstation (108) und zusätzlichem weißen Gaußschen Rauschen beeinträchtigt wird.

**14.** Drahtloses Kommunikationssystem nach Anspruch 12, wobei das Funksignal durch Signale von mindestens einer benachbarten Kanalbasisstation (108) und zusätzlichem weißen Gaußschen Rauschen beeinträchtigt wird.

**15.** Drahtloses Kommunikationssystem (100) nach Anspruch 12, wobei der Partitionsselektor (318) die beste Partition (320) auswählt durch:

Bestimmen (402) von euklidischen Abständen zwischen Signalpunkten in jeder Teilmenge für jede Partition;
Bestimmen (404) eines euklidischen Mindestabstands innerhalb einer Teilmenge für jede Partition; und
Bestimmen (406) der besten Partition (320), welche diejenige ist, die den euklidischen Mindestabstand innerhalb einer Teilmenge maximiert.

**16.** Drahtloses Kommunikationssystem (100) nach Anspruch 12, wobei der Empfangsfilter (302) das empfangene Funksignal übersampelt.

**17.** Drahtloses Kommunikationssystem (100) nach Anspruch 12, wobei die Empfangseinheit (104) eine mobile Station ist.

**18.** Drahtloses Kommunikationssystem (100) nach Anspruch 12, wobei die Übertragungseinheit (102) eine Basisstation ist.

**19.** Drahtloses Kommunikationssystem (100) nach Anspruch 12, wobei die Empfangseinheit (104) eine Einzelantennenempfangseinheit (104) oder eine Mehrfachantennenempfangseinheit (104) ist.


**Revendications**

**1.** Récepteur (106) comprenant :

une antenne de réception (110) et un filtre de réception (302) permettant de recevoir et de filtrer un signal radio ;
un estimateur de réponse de canal (304) permettant d'estimer les réponses de canal (306) à l'aide de symboles d'apprentissage dans le signal radio reçu ;
ledit récepteur étant **caractérisé en ce qu'**il comprend en outre :

un estimateur (308) de pré-filtre et filtre de blanchiment du bruit permettant d'estimer les réponses de canal nettes (310) en utilisant les réponses de canal estimées (306) et le signal radio reçu ;
un pré-filtre et filtre de blanchiment du bruit (312) permettant de filtrer le signal radio reçu en utilisant les réponses de canal nettes estimées (310) ;
un sélecteur de partition d'ensemble (318) permettant de sélecter l'une des meilleures partitions d'ensemble (320) à partir d'un groupe de partitions données en utilisant les réponses de canal nettes estimées (310) et le signal radio filtré (314), où ladite meilleure partition d'ensemble sélectionnée (320) décrit les états de signal d'un ensemble de signaux conjoints associé au signal radio filtré (314) devant être combinés ensemble pour déterminer un treillis conjoint en état réduit ; et
un démodulateur en état réduit (316) permettant une démodulation conjointe de plusieurs symboles de données (322) dans le signal radio filtré (314) en utilisant le treillis conjoint en état réduit déterminé par la meilleure partition d'ensemble sélectionnée (320), où les plusieurs symboles de données (322) dans ledit le signal radio filtré ont été reçus en provenance d'au moins deux émetteurs (102) et (108).

**2.** Récepteur (106) selon la revendication 1, où ledit sélecteur de partition d'ensemble (318) sélectionne la meilleure partition d'ensemble (320) en :

déterminant (402) les distances euclidiennes entre les points du signal dans chaque sous-ensemble pour chaque partition ;
déterminant (404) une distance euclidienne minimale à l'intérieur du sous-ensemble pour chaque partition ; et
déterminant (406) la meilleure partition d'ensemble (320), à savoir celle qui optimise la distance euclidienne minimale à l'intérieur du sous-ensemble.

**3.** Récepteur (106) selon la revendication 1, où ladite meilleure partition d'ensemble sélectionnée (320) décrit les états de signal d'un ensemble de signaux conjoints associé au signal radio filtré (314) devant être combinés ensemble pour permettre l'égalisation en état réduit d'un canal MIMO, à entrées multiples et sorties multiples.

**4.** Récepteur (106) selon la revendication 1, où ladite meilleure partition d'ensemble sélectionnée (320) décrit les états de signal d'un ensemble de signaux conjoints associé au signal radio filtré (314) devant être combinés ensemble pour permettre la démodulation conjointe en état réduit du signal radio filtré (314).

**5.** Récepteur (106) selon la revendication 1, où ledit sélecteur de partition d'ensemble (318) sélectionne une autre meilleure partition d'ensemble (320) pour chaque salve de données dans le signal radio filtré (314).

**6.** Récepteur (106) selon la revendication 1, où ledit filtre de réception (302) sur-échantillonne le signal radio reçu.

**7.** Procéder pour atténuer les interférences au niveau d'un récepteur dans un système de communications sans fil, ledit procédé comprenant les étapes suivantes :

réception et filtrage d'un signal radio (r(n)) ;
estimation des réponses de canal (306) à l'aide de symboles d'apprentissage dans le signal radio reçu ;
ledit procédé étant **caractérisé par** :

estimation des réponses de canal nettes (310) en utilisant les réponses de canal estimées (306) et le signal radio reçu ;
filtrage du signal radio reçu en utilisant les réponses de canal nettes estimées (310);
sélection de l'une des meilleures partitions d'ensemble (320) à partir d'un groupe de partitions données en utilisant les réponses de canal nettes estimées (310) et le signal radio filtré (314) où ladite meilleure partition d'ensemble sélectionnée (320) décrit les états de signal d'un ensemble de signaux conjoints associé au signal radio filtré (314) devant être combinés ensemble pour déterminer un treillis conjoint en état réduit ; et démodulation conjointe de plusieurs symboles de données (322) dans le signal radio filtré (314) en utilisant le treillis conjoint en état réduit déterminé par la meilleure partition d'ensemble sélectionnée (320), où les plusieurs symboles de données (322) dans ledit le signal radio filtré ont été reçus en provenance d'au moins deux émetteurs (102) et (108).

8. Procédé selon la revendication 7, où ledit sélecteur de partition d'ensemble (318) sélectionne la meilleure partition d'ensemble (320) en :

déterminant (402) les distances euclidiennes entre les points du signal dans chaque sous-ensemble pour chaque partition ;
déterminant (404) une distance euclidienne minimale à l'intérieur du sous-ensemble pour chaque partition ; et
déterminant (406) la meilleure partition d'ensemble (320), à savoir celle qui optimise la distance euclidienne minimale à l'intérieur du sous-ensemble.

9. Procédé selon la revendication 7, où ladite meilleure partition d'ensemble sélectionnée (320) décrit les états de signal d'un ensemble de signaux conjoints associé au signal radio filtré (314) devant être combinés ensemble pour permettre l'égalisation en état réduit d'un canal MIMO, à entrées multiples et sorties multiples.

10. Procédé selon la revendication 7, où ladite meilleure partition d'ensemble sélectionnée (320) décrit les états de signal d'un ensemble de signaux conjoints associé au signal radio filtré (314) devant être combinés ensemble pour permettre la démodulation conjointe en état réduit du signal radio filtré (314).

11. Procédé selon la revendication 7, où une autre meilleure partition d'ensemble (320) est sélectionnée pour chaque salve de données dans le signal radio filtré (314).

12. Système de communications sans fil (100) comprenant:

une unité de transmission (102) ;
une unité de réception (104) pour atténuer les interférences provenant d'au moins une deuxième unité de transmission (108) dans un signal radio reçu en provenance de ladite l'unité de transmission (102) ; et
où ladite unité de réception (104) comprend en outre :

une antenne de réception (110) et un filtre de réception (302) permettant de recevoir le signal radio ;
un estimateur de réponse de canal (304) permettant d'estimer les réponses de canal (306) de l'unité de transmission (102) et de ladite au moins deuxième unité de transmission (108) en utilisant des symboles d'apprentissage dans le signal radio reçu ;
un estimateur (308) de pré-filtre et filtre de blanchiment du bruit permettant d'estimer les réponses (310) de canal nettes en utilisant les réponses de canal estimées (306) et le signal radio reçu ;
ledit système de communications sans fil étant **caractérisé en ce que** ladite unité de réception comprend en outre :

un pré-filtre et filtre de blanchiment du bruit (312) permettant de filtrer le signal radio reçu en utilisant les réponses de canal nettes estimées (310) ;
un sélecteur de partition d'ensemble (318) permettant de sélectionner la meilleure partition d'ensemble (320) à partir d'un groupe de partitions données en utilisant les réponses de canal nettes estimées (310) et le signal radio filtré (314), où ladite meilleure partition d'ensemble sélectionnée (320) décrit les états de signal d'un ensemble de signaux conjoints associé au signal radio filtré (314) devant être combinés ensemble pour déterminer un treillis conjoint en état réduit ; et

un démodulateur en état réduit (316) permettant une démodulation conjointe de plusieurs symboles de données (322) dans le signal radio filtré (314) en utilisant le treillis conjoint en état réduit déterminé par la meilleure partition d'ensemble sélectionnée (320), où les plusieurs symboles de données (322) dans ledit le signal radio filtré ont été reçus en provenance d'au moins deux unités de transmission (102) et (108).

**13.** Système de communications sans fil (100) selon la revendication 12, où ledit signal radio est perturbé par des signaux d'au moins une station de base partageant le même canal (108) et un bruit gaussien blanc supplémentaire.

**14.** Système de communications sans fil selon la revendication 12, où ledit signal radio est perturbé par des signaux d'au moins une station de base d'un canal adjacent (108) et un bruit gaussien blanc supplémentaire.

**15.** Système de communications sans fil (100) selon la revendication 12, où ledit sélecteur de partition d'ensemble (318) sélectionne la meilleure partition d'ensemble (320) en :

déterminant (402) les distances euclidiennes entre les points du signal dans chaque sous-ensemble pour chaque partition ;
déterminant (404) une distance euclidienne minimale à l'intérieur du sous-ensemble pour chaque partition ; et
déterminant (406) la meilleure partition d'ensemble (320), à savoir celle qui optimise la distance euclidienne minimale à l'intérieur du sous-ensemble.

**16.** Système de communications sans fil (100) selon la revendication 12, où ledit filtre de réception (302) sur-échantillonne le signal radio reçu.

**17.** Système de communications sans fil (100) selon la revendication 12, où ladite unité de réception (104) est une station mobile.

**18.** Système de communications sans fil (100) selon la revendication 12, où ladite unité de transmission (102) est une station de base.

**19.** Système de communications sans fil (100) selon la revendication 12, où ladite unité de réception (104) est une unité de réception à une seule antenne (104) ou une unité de réception à plusieurs antennes (104).

FIG. 1

FIG. 2

FIG. 3

DETERMINE EUCLIDEAN DISTANCES B/W SIGNAL POINTS IN EACH SUBSET FOR EACH PARTITION ~402

DETERMINE THE MINIMUM INTRA-SUBSET EUCLIDEAN DISTANCE FOR EACH PARTITION ~404

DETERMINE THE PARTITION WHICH MAXIMIZES THE MINIMUM INTRA-SUBSET EUCLIDEAN DISTANCE ~406

BEST SET PARTITION
~320

FIG. 4

FIG. 5

FIG. 6

16

FIG. 7

FIG. 8

FIG. 9

FIG. 10

FIG. 11

# EP 1 829 308 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAFEEZ et al.** Interference cancellation for EDGE via two-user joint demodulation. *IEEE 58th Vehicular technology conference - VTC 2003,* 06 October 2003, 1025
- **HOEHER P et al.** Joint deleyed-decision feedback sequence estimation with adaptive state allocation. *International Symposium on Information Theory - ISIT 2004,* 27 June 2004, 133-133
- **G. D. FORNEY.** Maximum-likelihood sequence estimation of digital sequences in presence if ISI. *IEEE Trans. On Inf. Theory.,* May 1972, vol. IT-18, 363-378

- **M. V. EYUBOGLU ; S.U.H. QUERESHI.** Reduced-state sequence estimation with set partitioning and decision feedback. *IEEE Trans. Commun.,* January 1998, vol. 36, 13-20
- **A. DUEL-HALLEN ; C. HEEGARD.** Delayed decision-feedback sequence estimation. *IEEE Trans. Commun.,* May 1989, vol. COM-37, 428-436
- **G. UNGERBOECK.** *Channel coding with multilevel/phase signals,* January 1982, vol. IT-28, 55-67